# EUROPEAN PATENT SPECIFICATION

(11) **EP 0 306 909 B1**
(45) Date of publication and mention of the grant of the patent: **01.12.1993**
(21) Application number: 88114580.9
(22) Date of filing: 07.09.1988
(51) Int. Cl.: G11B 27/34, G11B 27/02, G11B 27/19

(54) **Optical disc reproducing apparatus**
Wiedergabegerät für optische Platten
Appareil de reproduction de disques optiques

(30) Priority: 08.09.1987 JP 224341/87
(43) Date of publication of application: 15.03.1989
(73) Proprietor: MATSUSHITA ELECTRIC INDUSTRIAL CO., LTD., Kadoma-shi, Osaka-fu, 571 (JP)
(72) Inventor: Tomoda, Haruhisa, Kashigara-shi Nara-ken (JP); Shimada, Yasuomi, Ikoma-shi Nara-ken (JP)
(74) Representative: Eisenführ, Speiser & Partner

(56) References cited:
- EP-A- 0 275 199
- EP-A- 0 276 143
- PATENT ABSTRACTS OF JAPAN vol. 10, no. 147 (P-460)(2204) 29 May 1986, & JP-A-60 263387
- PATENT ABSTRACTS OF JAPAN vol. 8, no. 275 (P-321)(1712) 15 December 1984, & JP-A-59 142789
- PATENT ABSTRACTS OF JAPAN vol. 8, no. 65 (P-263)(1502) 27 March 1984, & JP-A-58 212686
- PATENT ABSTRACTS OF JAPAN vol. 8, no. 65 (P-263)(1502) 27 March 1984, & JP-A-58 212691
- PATENT ABSTRACTS OF JAPAN vol. 11, no. 261 (P-609)(2708) 25 August 1987, & JP-A-62 66491

## Description

The invention relates to a programming device of an optical disc reproducing apparatus, the optical disc reproducing apparatus being adapted for reproducing recorded information recorded on an optical disc, the recorded information including a plurality of discrete audio selections and index numbers identifying each of the plurality of discrete audio selections and playing time information indicating the playing time of each of the plurality of discrete audio selections; the optical disc reproducing apparatus having signal detection means for detecting the recording information recorded on the optical disc, and display means for displaying index numbers and playing time; the programming device being adapted for programming the playing sequence of the plurality of discrete audio selections for recording onto a magnetic recording medium having first and second recording faces; further comprising recording time input means for inputting of a recording time of the magnetic recording medium; and recording memory means, coupled to said recording time input means, for storing the recording time of the magnetic recording medium; arithmetic means coupled to said signal detecting means, and said recording time memory means, for determining how many of the discrete audio selections can be recorded on the first recording face of the magnetic tape in accordance with the recording time of the magnetic tape and the playing time information of the discrete audio selections.

An optical disc reproducing apparatus having such a programming device, is already known from JP-A-62-66491. A microcomputer judges whether or not all audio selections can be recorded on one side of a magnetic tape. If an audio selection is longer than the remaining space on the first face of the magnetic tape, the magnetic tape recorder is switched into reverse operation in order to record the remaining audio selections on the other side.

It is an object of the present invention to provide an optical disc reproducing apparatus which is capable of displaying edited information on both faces simultaneously, and to provide the possibility to edit both sides independently.

For solving this problem, a programming device as defined above is characterized by the arithmetic means being adapted for calculating respectively for each of the first and second recording faces of the magnetic tape first and second remainder times denoting a difference between the recording time of the first and second recording faces and a total of the playing times of the discrete audio selections to be recorded on the first and second recording faces; a first face audio selection memory means, coupled to said arithmetic means, for storing the index numbers of the discrete audio selections determined by said arithmetic means to be recorded on the first face of the magnetic recording medium; a second face audio selection memory means, coupled to said arithmetic means, for storing the index numbers of the discrete audio selections determined by said arithmetic means to be recorded on the second face of the magnetic medium; audio selection deletion inputting means, coupled to said first and second face audio selection memory means, for inputting of an index number of a discrete audio selection to be deleted from one of said first face audio selection memory means and said second face audio selection memory means; and audio selection addition inputting means, coupled to said first and second face audio selection memory means, for inputting of an index number of a discrete audio selection to be added to one of said first face audio selection memory means and said second face audio selection memory means; wherein said arithmetic means includes means for recalculating the first and second remainder times upon at least one of an addition and a deletion of a discrete audio selection stored in at least one of said first and second face audio selection memory means ; further comprising a first face display memory means, coupled to said arithmetic means and said first face audio selection memory means, for storing as first face display information at least one of the first remainder time calculated by said arithmetic means and the index numbers stored in said first face audio selection memory means; a second face display memory means, coupled to said arithmetic means and said second face audio selection memory means, for storing as second face display information at least one of the second remainder time calculated by said arithmetic means and the index numbers stored in said second face audio selection memory means; a display means, having a first display region and a second display region and coupled to said first and second face display memory means, for displaying in said first display region the first face display information stored in said first face display memory means and for displaying in said second display region the second face display information stored in said second face display memory means; and wherein the recalculated first and second remainder times are stored in said first and second face display memory means, respectively.

Whereas in the patent claims the term "first and second recording faces" has been used, these two faces hereinafter will be termed "A and B faces".

These and other objects and features of the present invention will become clear from the following description taken in conjunction with the preferred embodiment thereof with reference to the accompanying drawings, in which;
Fig. 1 is a block diagram of an optical disc reproducing apparatus in all embodiment of the present invention;
Fig. 2 is a block diagram of the essential portions thereof;

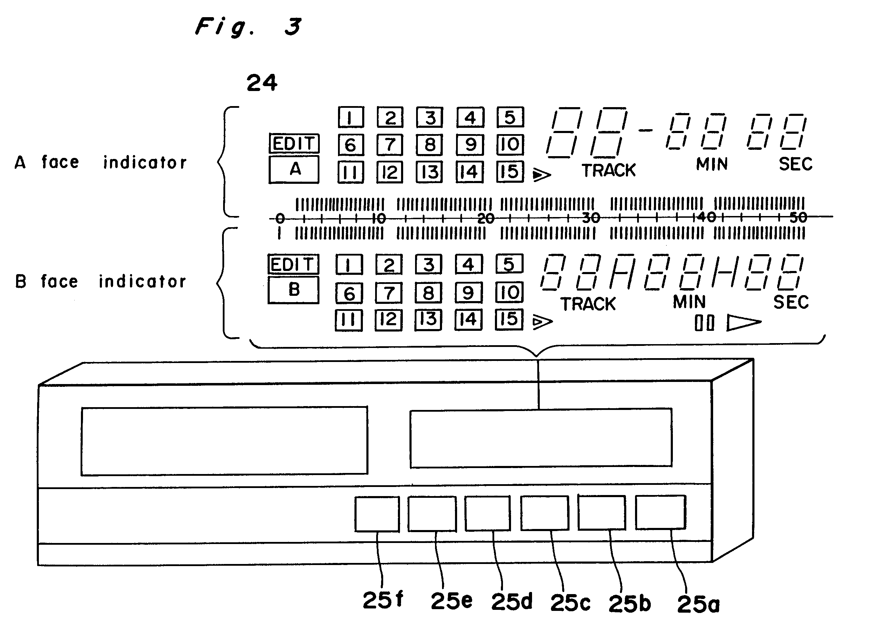

Fig. 3 is a perspective view of the appearance thereof; and
Fig. 4 is a flow-chart for the simultaneous display of the A face and B face editing information of the same apparatus.

Before the description of the present invention proceeds, it is to be noted that like parts are designated by like reference numerals throughout the accompanying drawings.

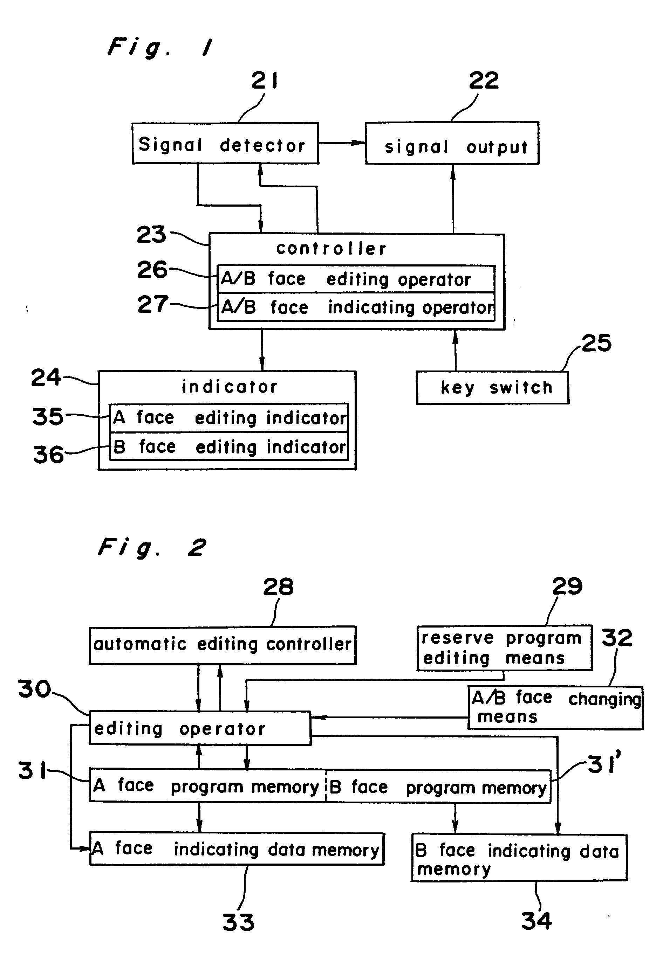

Referring now to the block diagrams, there is shown in Fig. 1 and Fig. 2, an optical disc reproducing apparatus according to the embodiment of the present invention, which includes a signal detection unit 21 and a signal output unit 22 each having the same function as that in conventional devices. It further includes a control unit 23 for controlling the signal detection unit 21 and the signal output unit 22, with an A/B face editing arithmetic unit 26 and an A/B face display control unit 27 to be fully described later being provided in one portion thereof, a display unit 24 for displaying the performance time and the edited information, having an A face editing display unit 35 and a B face editing display unit 36. A key switch unit 25 is composed of a play key 25a for instructing the performance start to the control unit 23, an editing specification key 25b for specifying the editing operation, an edited time input key 25c for inputting the editing time period, an A/B face change-over key 25d for exchanging the editing face, a program input key 25e for inputting a reserved music for reservation of a piece to be performed, a program detection key 25f for deleting the reserved music and so on. An A/B face editing arithmetic unit 26 and an A/B face display control unit 27 includes an automatic editing control unit 28 having the same function as that in conventional devices, reserved performance music editing means 29, an editing arithmetic unit 30, an A face editing music memory unit 31 and a B face editing music memory unit 31', an A/B face change-over means 32 for exchanging the editing face, an A face display information memory unit 33 for storing as the A face display information the A face edited information about the remaining time and the number of the musics obtained in the editing arithmetic unit 30, and the music or the like stored in the A face edited music memory unit 31, and a B face display information memory unit 34 for similarly storing the edited information on the B face.

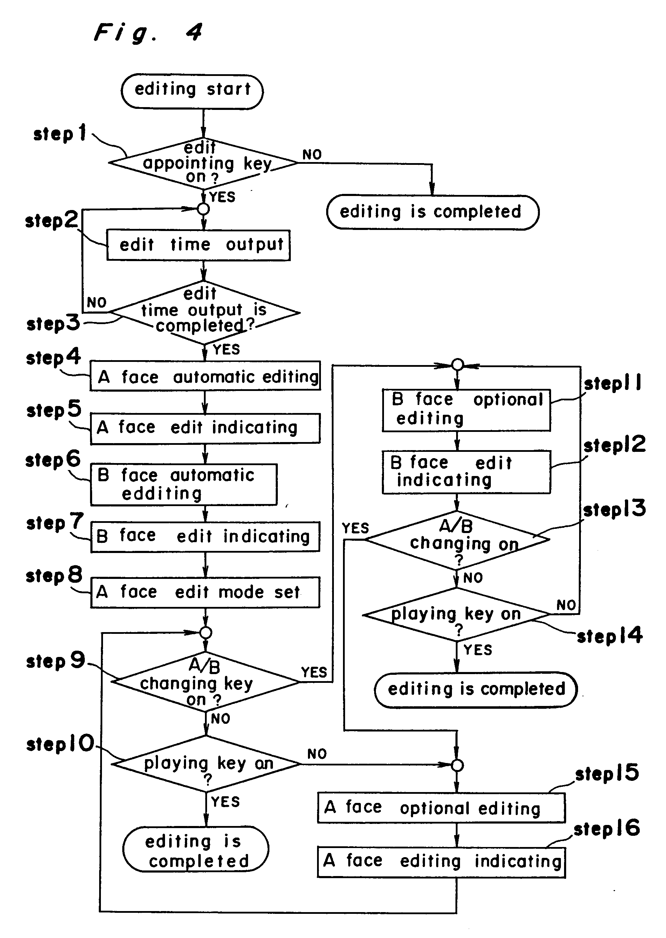

The functions of the present invention will be described with reference to the flow chart of Fig. 4.

At a step 1, it is judged whether or not an editing specification key 25b has been depressed. The step moves to the step 2 if the key has been depressed. When the key has not been depressed, the editing processing is completed. At the step 2, the inputting of the edited time period is received by an edit time input key 25c. At the step 3, it is judged whether or not the inputting operation of the edit time period has been completed. When it has been completed, the step moves to the step 4. When it has not been completed, the step moves to the step 2 to repeat the steps 2 through 3 till the inputting of the edit time period is completed. At the step 4, the audio selections which may be performed by the A face are calculated by the automatic editing control unit 28 and the editing arithmetic unit 30 based on the inputted edit time period so as to store the edited audio selections in the A face editing memory unit 31. At the step 5, the A face edited information about the A face edited audio selections obtained by the automatic editing, the number thereof, and the remaining time period or the like is stored as the display information in the A face display information memory unit 33, and is displayed by the A face editing display unit 35. At the step 6, the automatic editing for the B face is effected as in the same manner as at the step 4. At the step 7, the B face edited information is stored as the display information in the B face display information memory unit 34 and is displayed by the B face editing display unit 36 as at the step 5. In this state, the edited information of the A face and the B face is to be displayed at the same time. At the step 8, it is set that the subsequent operation by the reserved performance music editing means 29 may be received as the A face editing. At the step 9, it is judged whether or not the A/B face change-over key 25d has been depressed. When it has been depressed, the mode becomes the B face editing one, with the step moving to 11. When it has not been depressed, the step moves to 10. At the step 10, it is judged whether or not the play key 25a has been depressed. When it has not been depressed, the step moves to 15. When it has been depressed, the editing process is completed. At the step 11, the inputs of the program input key 25e and the program deletion key 25f are received so as to edit the optional musics in the optional order about the B face. The calculation is effected by the editing arithmetic unit 30 about the B face edited audio selections edited through the inputs.

At the step 12, the B face edited information obtained at the step 11 is stored in the B face display information memory unit 34 so as to display it by the B face editing display unit 36. At this time, as the A face display information memory unit 33 does not change, the A face editing display 35 continues its display as it is. At the step 13, it is judged whether or not the A/B change-over key 25d has been depressed again. When it has been depressed, the mode becomes an A face editing one, with the step moving to 15. When it has not been depressed, the step moves to 14.

At the step 14, it is judged whether or not the play key 25a has been depressed. When it has not been depressed, the step returns to 11 to continue the optional editing for the B face. When it has been depressed, the editing process is completed. At the step 15, the optional editing about the A face is received as at the step 11, so that the calculation is effected about the A face edited audio selections by the editing arithmetic unit 30. At the step 16, the A face edited information obtained by the step 15 is stored in the A face display information memory unit 33. It is displayed by the A face editing display unit 36, with the step returning to 9.

According to the present embodiment, during the second editing operation for the disc, the A face edited information is stored in the A face display information memory unit to display the information by the A face editing display unit. Furthermore, the B face edited information is stored in the B face display information memory unit to display the information by the B face editing display unit, so that the editing information for the A face and B face may be simultaneously displayed.

As is clear from the foregoing description, the present invention comprises a signal detection unit for detecting music information, TOC (Table of Contents) information and so on recorded on the disc, an automatic editing control unit for automatically setting the reserved performance music so that the audio selections on the disc may be performed within the A face and B face editing time period of the tape when the information on the disc is edited, recorded on the magnetic recording tape or the like, a reserved performance music editing means for adding or deleting the reserved performance audio selections when the optional selections are edited manually at the optional order, an editing arithmetic unit for obtaining the performance time period of the edited selections for the TOC information detected by the signal detection unit during the editing to further calculate the difference as the remaining time period between it and the editing time period, an A face edited music memory unit for storing the edited selections on the A face during or after the editing, a B face edited music memory unit for similarly storing the edited selections on the B face, an A/B face change-over means for changing over the editing face, an A face display information memory unit for storing, as the A face display information, the A face edited information about the remaining time obtained by the editing arithmetic unit, the number of the selections, and the selections or the like stored in the A face edited music memory unit, a B face display information memory unit for similarly storing the edited information on the B face, an A face editing display unit for displaying the A face display information, a B face editing display unit for displaying the B face display information, with the A face and the B face edited information being capable of the simultaneous display.

## Claims

1. A programming device of an optical disc reproducing apparatus, the optical disc reproducing apparatus being adapted for reproducing recorded information recorded on an optical disc, the recorded information including a plurality of discrete audio selections and index numbers identifying each of the plurality of discrete audio selections and playing time information indicating the playing time of each of the plurality of discrete audio selections;
the optical disc reproducing apparatus having signal detection means (21) for detecting the recording information recorded on the optical disc, and display means (24) for displaying index numbers and playing time;
the programming device being adapted for programming the playing sequence of the plurality of discrete audio selections for recording onto a magnetic recording medium having first and second recording faces;
further comprising
recording time input means (25c) for inputting of a recording time of the magnetic recording medium; and
recording memory means, coupled to said recording time input means (25c), for storing the recording time of the magnetic recording medium;
arithmetic means (23, 28, 30), coupled to said signal detecting means (21), and said recording time memory means, for determining how many of the discrete audio selections can be recorded on the first recording face of the magnetic tape in accordance with the recording time of the magnetic tape and the playing time information of the discrete audio selections,
characterized by
the arithmetic means (23, 28, 30) being adapted for calculating respectively for each of the first and second recording faces of the magnetic tape first and second remainder times denoting a difference between the recording time of the first and second recording faces and a total of the playing times of the discrete audio selections to be recorded on the first and second recording faces;
a first face audio selection memory means (31), coupled to said arithmetic means (23, 28, 30), for storing the index numbers of the discrete audio selections determined by said arithmetic means to be recorded on the first face of the magnetic recording medium;
a second face audio selection memory means (31'), coupled to said arithmetic means (23, 28, 30), for storing the index numbers of the discrete audio selections determined by said arithmetic means to be recorded on the second face of the magnetic medium;
audio selection deletion inputting means (25f), coupled to said first and second face audio selection memory means (31, 31'), for inputting of an index number of a discrete audio selection to be deleted from one of said first face audio selection memory means (31) and said second face audio selection memory means (31'); and
audio selection addition inputting means (5e), coupled to said first and second face audio selection memory means (31, 31'), for inputting of an index number of a discrete audio selection to be added to one of said first face audio selection memory means and said second face audio selection memory means (31, 31');
wherein said arithmetic means (23, 28, 30) includes means for recalculating the first and second remainder times upon at least one of an addition and a deletion of a discrete audio selection stored in at least one of said first and second face audio selection memory means (31, 31');
further comprising:
a first face display memory means (33), coupled to said arithmetic means (23, 28, 30) and said first face audio selection memory means (31), for storing as first face display information at least one of the first remainder time calculated by said arithmetic means and the index numbers stored in said first face audio selection memory means (31);
a second face display memory means (34), coupled to said arithmetic means (23, 28, 30) and said second face audio selection memory means (31'), for storing as second face display information at least one of the second remainder time calculated by said arithmetic means and the index numbers stored in said second face audio selection memory means (31');
a display means (24), having a first display region (35) and a second display region (36) and coupled to said first and second face display memory means (33, 34), for displaying in said first display region (35) the first face display information stored in said first face display memory means (33) and for displaying in said second display region (36) the second face display information stored in said second face display memory means (34); and
wherein the recalculated first and second remainder times are stored in said first and second face display memory means (33, 34), respectively.

## Patentansprüche

1. Programmiereinrichtung eines Wiedergabegerätes für optische Platten, welches zur Wiedergabe von auf einer optischen Platte aufgezeichneten Informationen geeignet ist, wobei die aufgezeichneten Informationen eine Mehrzahl von diskreten Audioselektionen und Indexzahlen, die jede der diskreten Audioselektionen identifizieren, sowie Spielzeitinformationen aufweisen, die die Spielzeit jeder der diskreten Audioselektionen anzeigen; wobei
das Wiedergabegerät für optische Platten Signal-Detektionseinrichtungen (21) zur Erfassung der auf der optischen Platte aufgezeichneten Informationen und Anzeigeeinrichtungen (24) zur Anzeige von Indexzahlen und Spielzeiten aufweist;
die Programmiereinrichtung zur Programmierung der Spielfolge der Anzahl von diskreten Audioselektionen zur Aufzeichnung auf ein magnetisches Aufzeichnungsmedium mit ersten und zweiten Aufzeichnungsspuren dient; mit
Aufzeichnungszeit-Eingabeeinrichtungen (25c) zur Eingabe einer Aufzeichnungszeit des magnetischen Aufzeichnungsmediums;
Aufzeichnungs-Speichereinrichtungen, die mit den Aufzeichnungszeit-Eingabeeinrichtungen (25c) zur Speicherung der Aufzeichnungszeit des magnetischen Aufzeichnungsmediums verbunden sind; und
arithmetischen Einrichtungen (23, 28, 30), die mit den Signal-Detektionseinrichtungen (21) und den Aufzeichnungszeit-Speichereinrichtungen verbunden sind, zur Bestimmung der Anzahl diskreter Audioselektionen, die auf der ersten Aufzeichnungsspur des Magnetbandes in Abhängigkeit von der Aufzeichnungszeit des Magnetbandes und der Spielzeitinformation der diskreten Audioselektionen gespeichert werden können,
**gekennzeichnet durch**
arithmetische Einrichtungen (23, 28, 30) zur Berechnung erster und zweiter Restzeiten für jede der ersten und zweiten Aufzeichnungsspuren des Magnetbandes, welche eine Differenz zwischen der Aufzeichnungszeit der ersten und zweiten Aufzeichnungsspuren und einer Gesamtspielzeit der auf die ersten und zweiten Aufzeichnungsspuren aufzuzeichnenden diskreten Audioselektionen darstellen;
eine erste Spur-Audioselektions-Speichereinrichtung (31), die mit den arithmetischen Einrichtungen (23, 28, 30) verbunden ist, zur Speicherung der Indexzahlen der diskreten Audioselektionen, welche durch die arithmetischen Einrichtungen bestimmt werden und auf der ersten Spur des magnetischen Aufzeichnungsmediums aufzuzeichnen sind;
eine zweite Spur-Audioselektions-Speichereinrichtung (31'), die mit den arithmetischen Einrichtungen (23, 28, 30) verbunden ist, zur Speicherung der Indexzahlen der diskreten Audioselektionen, die durch die arithmetischen Einrichtungen bestimmt werden und auf die zweite Spur des magnetischen Aufzeichnungsmediums aufzuzeichnen sind;
Eingabeeinrichtungen (25f) zur Löschung einer Audioselektion, die mit der ersten und zweiten Spur-Audioselektions-Speichereinrichtung (31, 31') verbunden sind, zur Eingabe einer Indexzahl einer aus der ersten Spur-Audioselektions-Speichereinrichtung (31) oder der zweiten Spur-Audioselektions-Speichereinrichtungen (31') zu löschenden diskreten Audioselektion;
Eingabeeinrichtungen (5e) zur Addition einer Audioselektion, die mit der ersten und zweiten Spur-Audioselektions-Speichereinrichtung (31, 31') verbunden sind, zur Eingabe einer Indexzahl einer diskreten Audioselektion, die zu der ersten Spur-Audioselektions-Speichereinrichtung oder der zweiten Spur-Audioselektions-Speichereinrichtung (31, 31') zu addieren ist; wobei
die arithmetischen Einrichtungen (23, 28, 30) Einrichtungen zur erneuten Berechnung der ersten und zweiten Restzeiten nach einer Addition und/oder Löschung einer diskreten Audioselektion aufweisen, die in mindestens einer der ersten und zweiten Spur-Audioselektions-speichereinrichtungen (31, 31') gespeichert ist;
eine erste Spuranzeige-Speichereinrichtung (33), die mit den arithmetischen Einrichtungen (23, 28, 30) und der ersten Spur-Audioselektions-Speichereinrichtung (31) verbunden ist, zur Speicherung der ersten Restzeit, die durch die arithmetischen Einrichtungen berechnet wurden, und/ oder der Indexzahlen, die in der ersten Spur-Audioselektions-Speichereinrichtung (31) gespeichert sind, als eine erste Spuranzeigeinformation;
eine zweite Spuranzeige-Speichereinrichtung (34), die mit den arithmetischen Einrichtungen (23, 28, 30) und der zweiten Spur-Audioselektions-Speichereinrichtung (31') verbunden ist, zur Speicherung der zweiten Restzeit, die durch die arithmetischen Einrichtungen berechnet wird, und/oder der Indexzahlen, die in der zweiten Spur-Audioselektions-Speichereinrichtung (31') gespeichert sind, als eine zweite Spuranzeigeinformation; und
eine Anzeigeeinrichtung (24) mit einem ersten Anzeigebereich (35) und einem zweiten Anzeigebereich (36), die mit der ersten und zweiten Spuranzeige-Speichereinrichtung (33, 34) verbunden ist, zur Anzeige der in der ersten Spuranzeige-Speichereinrichtung (33) gespeicherten ersten Spuranzeigeinformation in dem ersten Anzeigebereich (35), sowie zur Anzeige der in der zweiten Spuranzeige-Speichereinrichtung (34) gespeicherten zweiten Spuranzeigeinformation in dem zweiten Anzeigebereich (36); wobei
die erneut berechneten ersten und zweiten Restzeiten in der ersten bzw. zweiten Spuranzeige-Speichereinrichtung (33, 34) gespeichert werden.

## Revendications

1. Dispositif de programmation d'un appareil de reproduction à disque optique, l'appareil de reproduction à disque optique étant conçu pour reproduire de l'information enregistrée, enregistrée sur un disque optique, l'information enregistrée incluant une pluralité de plages audio discrètes et de numéros repères identifiant chacune de la pluralité de plages audio discrètes et une information de durée de lecture indiquant la durée de lecture de chacune de la pluralité de plages audio discrètes ;
l'appareil de reproduction à disque optique comportant un moyen de détection de signal (21) pour détecter l'information enregistrée, enregistrée sur le disque optique, et un moyen d'affichage (24) pour afficher les numéros repères et la durée de lecture ;
le dispositif de programmation étant conçu pour programmer la séquence de lecture de la pluralité de plages audio discrètes pour enregistrement sur un support d'enregistrement magnétique ayant des première et seconde faces d'enregistrement ;
comprenant en outre :
un moyen d'entrée de durée d'enregistrement (25c) pour l'entrée d'une durée d'enregistrement du support d'enregistrement magnétique ; et un moyen de mémoire de durée d'enregistrement, relié audit moyen d'entrée de durée d'enregistrement (25c), pour mémoriser la durée d'enregistrement du support d'enregistrement magnétique ;
un moyen arithmétique (23, 28, 30), relié audit moyen de détection de signal (21), et audit moyen de mémoire de durée d'enregistrement, pour déterminer combien de plages audio discrètes peuvent être enregistrées sur la première face d'enregistrement du support d'enregistrement magnétique en fonction de la durée d'enregistrement du support d'enregistrement magnétique et de l'information de durée de lecture des plages audio discrètes ;
caractérisé en ce que :
le moyen arithmétique (23, 28, 30) est conçu pour calculer, respectivement, pour chacune des première et seconde faces d'enregistrement du support d'enregistrement magnétique des première et seconde durées restantes indiquant la différence entre la durée d'enregistrement des première et seconde faces d'enregistrement et le total des durées de lecture des plages audio discrètes à enregistrer sur les première et seconde faces d'enregistrement ;
un moyen de mémoire de plages audio de première face (31), relié audit moyen arithmétique (23, 28, 30), pour mémoriser les numéros repères des plages audio discrètes déterminées par ledit moyen arithmétique pour être enregistrées sur la première face du support d'enregistrement magnétique ;
un moyen de mémoire de plages audio de seconde face (31'), relié audit moyen arithmétique (23, 28, 30), pour mémoriser les numéros repères des plages audio discrètes déterminées par ledit moyen arithmétique pour être enregistrées sur la seconde face du support magnétique ;
un moyen d'entrée de suppression de plage audio (25f), relié auxdits moyens de mémoire de plages audio de première et de seconde faces (31, 31'), pour l'entrée d'un numéro repère d'une plage audio discrète à supprimer de l'un dudit moyen de mémoire de plages audio de première face (31) et dudit moyen de mémoire de plages audio de seconde face (31') ; et
un moyen d'entrée d'ajout de plage audio (25e), relié auxdits moyens de mémoire de plages audio de première et de seconde faces (31, 31'), pour l'entrée d'un numéro repère d'une plage audio discrète à ajouter à l'un dudit premier moyen de mémoire de plages audio de première face et dudit moyen de mémoire de plages audio de seconde face (31, 31') ;
dans lequel ledit moyen arithmétique (23, 28, 30) comprend un moyen pour recalculer les première et seconde durées restantes lors d'au moins un ajout ou une suppression d'une plage audio discrète mémorisée dans au moins un desdits moyens de mémoire de plages audio de première ou de seconde face (31, 31') ;
comprenant en outre :
un moyen de mémoire d'affichage de première face (33), relié audit moyen arithmétique (23, 28, 30), et audit moyen de mémoire de plages audio de première face (31), pour mémoriser comme information d'affichage de première face au moins l'un de la première durée restante calculée par ledit moyen arithmétique et des numéros repères mémorisés dans ledit moyen de mémoire de plages audio de première face (31) ;
un moyen de mémoire d'affichage de seconde face (34), relié audit moyen arithmétique (23, 28, 30), et audit moyen de mémoire de plages audio de seconde face (31'), pour mémoriser comme information d'affichage de seconde face au moins l'un de la seconde durée restante calculée par ledit moyen arithmétique et des numéros repères mémorisés dans ledit moyen de mémoire de plages audio de seconde face (31') ;
un moyen d'affichage (24), comportant une première zone d'affichage (35) et une seconde zone d'affichage (36) et relié auxdits moyens de mémoire d'affichage de première et de seconde faces (33, 34), pour afficher dans ladite première zone d'affichage (35) l'information d'affichage de première face mémorisée dans ledit moyen de mémoire d'affichage de première face (33), et pour afficher dans ladite seconde zone d'affichage (36) l'information d'affichage de seconde face mémorisée dans ledit moyen de mémoire d'affichage de seconde face (34) ; et,
dans lequel les première et seconde durées restantes recalculées sont mémorisées, respectivement, dans lesdits moyens de mémoire d'affichage de première et de seconde faces (33, 34).
